(19) Europäisches Patentamt / European Patent Office / Office européen des brevets

(11) **EP 1 379 810 B1**

(12) **FASCICULE DE BREVET EUROPEEN**

(45) Date de publication et mention de la délivrance du brevet:
**16.03.2016 Bulletin 2016/11**

(21) Numéro de dépôt: **02730335.3**

(22) Date de dépôt: **04.04.2002**

(51) Int Cl.:
*F23D 14/60* (2006.01)   *F23D 14/66* (2006.01)
*F23D 14/22* (2006.01)   *F23D 14/32* (2006.01)
*F23C 7/02* (2006.01)   *F23C 6/04* (2006.01)
*F23C 15/00* (2006.01)   *F23D 17/00* (2006.01)

(86) Numéro de dépôt international:
**PCT/FR2002/001170**

(87) Numéro de publication internationale:
**WO 2002/081967 (17.10.2002 Gazette 2002/42)**

(54) **PROCÉDÉ DE COMBUSTION COMPORTANT DES INJECTIONS SÉPARÉES DE COMBUSTIBLE ET D'OXYDANT ET ENSEMBLE BRÛLEUR POUR LA MISE EN OEUVRE DE CE PROCÉDÉ**

VERBRENNUNGSVERFAHREN MIT GETRENNTEN EINSPRIZUNGEN VON BRENNSTOFF UND OXIDATIONSMITTEL UND BRENNERANORDNUNG ZUR DURCHFÜHRUNG DIESES VERFAHRENS

COMBUSTION METHOD COMPRISING SEPARATE INJECTIONS OF FUEL AND OXIDANT AND BURNER ASSEMBLY THEREFOR

(84) Etats contractants désignés:
**AT BE CH CY DE DK ES FI FR GB GR IE IT LI LU MC NL PT SE TR**

(30) Priorité: **06.04.2001 FR 0104738**

(43) Date de publication de la demande:
**14.01.2004 Bulletin 2004/03**

(73) Titulaire: **L'AIR LIQUIDE, Société Anonyme pour l'Etude et l'Exploitation des Procédés Georges Claude 75007 Paris (FR)**

(72) Inventeurs:
• **DUGUE, Jacques**
  **F-78180 Montigny-le-Bretonneux (FR)**
• **LEGIRET, Thierry**
  **F-78117 Toussus le Noble (FR)**
• **TSIAVA, Rémi, Pierre**
  **F-91250 St Germain les Corbeil (FR)**
• **LOUEDIN, Olivier**
  **F-91650 Breuillet (FR)**

(74) Mandataire: **De Vleeschauwer, Natalie Y.L.D.**
**L'Air Liquide S.A.**
**Direction de Propriété Intellectuelle**
**75 Quai d'Orsay**
**75321 Paris Cedex 07 (FR)**

(56) Documents cités:
**US-A- 3 957 420     US-A- 4 144 016**
**US-A- 4 602 575     US-A- 4 842 509**
**US-A- 5 302 111     US-A- 5 954 855**
**US-A- 6 126 438**

**Description**

La présente invention concerne un procédé de combustion dans un four dans lequel on injecte séparément au moins un combustible et au moins un oxydant, le jet d'oxydant comportant un jet d'oxydant primaire et un jet d'oxydant secondaire, le jet d'oxydant primaire étant injecté à proximité du combustible de manière à engendrer une première combustion incomplète, les gaz issus de cette première combustion comportant encore au moins une partie du combustible, tandis que le jet d'oxydant secondaire est injecté à une distance du jet de combustible qui est supérieure à la distance entre le jet de combustible et le jet d'oxydant primaire le plus proche du jet de combustible, de manière à entrer en combustion avec le combustible présent dans les gaz issus de la première combustion. L'invention concerne également un ensemble brûleur pour la mise en oeuvre d'un tel procédé.

Les performances d'un système de combustion dans un four industriel sont caractérisées par au moins deux facteurs :

- Les rejets de polluants atmosphériques (NOx, poussières...) qui doivent être en quantité inférieure à la limite fixée par la législation,
- La température des parois du four et de la charge à chauffer qui doit être située entre deux limites en relation avec les besoins du procédé en terme de qualité de produit et consommation énergétique.

L'évolution de la législation sur les émissions de polluants atmosphériques, notamment les oxydes d'azote et les poussières, ont conduit récemment à une évolution importante des technologies de combustion.

Au delà du besoin de minimiser l'émission de polluants, la mise en oeuvre de la combustion dans un four industriel doit être adaptée à la fonction du four.

Par exemple, un four de production de verre doit respecter des caractéristiques de température de parois et de bain afin d'éviter d'éventuels défauts de qualité du produit (bulles, etc...), ainsi que le vieillissement prématuré des surfaces réfractaires.

Dans un four de réchauffage de billettes d'acier, les billettes doivent être chauffées d'une façon uniforme afin d'éviter leur déformation avant l'entrée dans le laminoir.

Dans un four de fusion de produits métalliques (ferreux ou non)., un chauffage uniforme doit être assuré le long de la charge afin de limiter une augmentation de la consommation d'énergie et l'usure prématurée des réfractaires.

Le contrôle du champ de températures (c'est à dire de la plage de températures entre lesquelles celle-ci peut varier) dans un four industriel est donc essentiel pour la qualité du produit et la performance du procédé. Le champ de température des surfaces réfractaires et de la charge le long de l'axe principal d'un four dépend du nombre, de l'espacement et de la distribution de puissance des brûleurs placés perpendiculairement à cet axe. Ceci est le cas par exemple des fours de réchauffage de billettes, ainsi que des fours de verre dans lesquels des brûleurs sont situés de part et d'autre de la charge. Le champ de température le long de l'axe parallèle à la flamme dépend de la longueur, de la puissance et de l'impulsion de la flamme, ainsi que de la géométrie de la zone à chauffer.

Il est connu, par exemple de US-A-4,531,960 et US-A-4,604,123, de moduler la longueur d'une flamme oxygène en utilisant un jet d'air « en rotation » (ou « swirl » en anglais) autour de l'axe de la flamme. Ce paramètre a une influence forte sur la longueur et la stabilité de la flamme. Un autre paramètre qui peut être contrôlé est le degré d'étagement de l'oxydant ou du combustible (fraction de débit introduit séparément de la zone de combustion primaire). Des brûleurs à combustion dite étagée sont par exemple décrits dans les brevets US-A-4,622,007, US-A-4,642,047, US-A-4,797,087, US-A-4,718,643 et Re.33,464, ou l'on décrit notamment l'utilisation de l'air et de l'oxygène comme comburants.

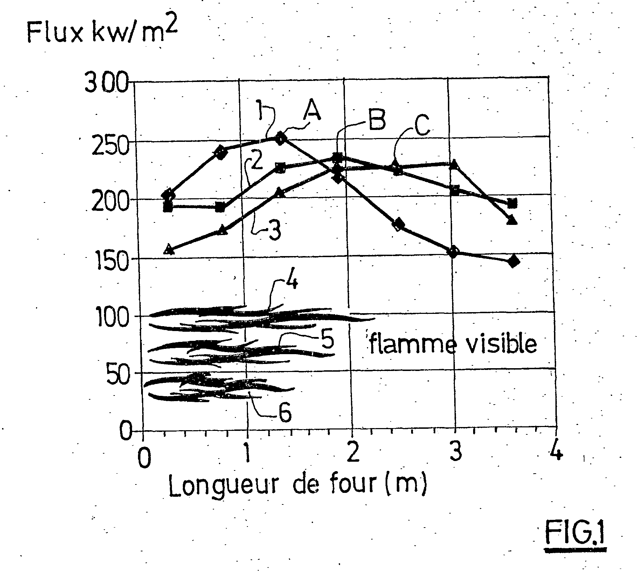

Les brûleurs utilisant de l'oxygène comme comburant, et en particulier les brûleurs utilisant un combustible gazeux, n'offrent généralement pas la possibilité, pour une puissance et facteur d'oxygène donnés, de faire varier de façon continue les caractéristiques de longueur ou d'impulsion de la flamme. De tels brûleurs sont par exemple décrits dans US-A-5,772,427, US-A-5,934,893, US-A-5,984,667, US-A-6,068,468 et US-5,954,855-A. Toutefois, il est possible de modifier la longueur de la flamme de tels brûleurs par le changement des injecteurs de combustibles. Il est à noter que l'utilisation d'injecteurs de plus petit diamètre engendre une augmentation de la quantité de mouvement, et donc le raccourcissement de la flamme ainsi que le déplacement du maximum de flux thermique vers l'aval (et vice-versa). La Figure 1 qui illustre la longueur de flamme visible et le flux thermique axial d'un brûleur d'une puissance de 1MW décrit dans US-A-5,772,427 et US-A-5,934,893 montre clairement ce résultat. Inversement, le raccourcissement de la flamme et l'augmentation de l'impulsion totale ont a priori des effets opposés sur le déplacement du profil thermique de la flamme. La combinaison des deux phénomènes cause le recul vers l'aval du flux thermique maximum parce que l'un des deux effets est dominant. L'abscisse de la figure 1 est comptée à partir de la paroi interne du four coïncidant avec la face interne du brûleur. La direction aval est donc vers les longueurs axiales croissantes.

Il est également connu de US-A-5,302,112, d'injecter des gaz à vitesses différentes dans un four, les variations de vitesses (absolues et relatives) permettant de faire varier la longueur de flamme et l'impulsion (ou quantité de mouvements de celle-ci).

Il est également connu de US-A-5,346,524 d'injecter séparément le combustible et l'oxydant en utilisant des injecteurs séparés, disposés alternativement, à proximité les uns des autres , à une distance de l'ordre de 15 cm.

Le brevet US-A-5,601,425 décrit un système de combustion étagée dans laquelle du fioul liquide est injecté au centre d'un jet d'oxygène périphérique, tandis que de l'air est injecté à une distance assez élevée de l'oxygène.

L'objet de l'invention est de répondre au double besoin de l'optimisation du profil thermique le long de l'axe de la flamme et de la minimisation des émissions d'oxydes d'azote.

Le procédé selon l'invention, tel que revendiqué dans la revendication 1, permet notamment l'ajustement de la performance d'une flamme à l'environnement dans lequel elle est placée, ceci en terme de profil thermique du four et de la charge, longueur de flamme, émission d'oxydes d'azotes et poussières.

Le procédé selon l'invention est caractérisé en ce que le jet d'oxydant primaire est lui-même divisé en au moins deux jets primaires, au moins un premier jet d'oxydant primaire à mélange rapide, injecté dans le jet de combustible ou au contact du jet de combustible, de manière à provoquer rapidement une réaction de combustion avec le combustible qui l'entoure, et au moins un second jet d'oxydant primaire à mélange lent injecté à une distance d1 du premier jet d'oxydant primaire, de manière à se mélanger moins rapidement au jet de combustible que l'un au moins des jets d'oxydant primaire à mélange rapide

**[0017]** - Afin de pouvoir, selon l'invention, contrôler de façon indépendante l'impulsion et la longueur de la flamme, le système de combustion selon l'invention comportera de préférence deux paramètres de réglage. De plus, parce qu'il est souhaitable, de préférence, de contrôler avec précision le profil thermique du four dans lequel on met en oeuvre le procédé, de préférence le premier paramètre de réglage sera constitué par le rapport entre le débit d'oxygène apporté par l'oxydant secondaire et le débit d'oxygène total apporté par les oxydants primaires et secondaires. Ce débit d'oxydant secondaire sera apporté par un injecteur ou une lance.

De préférence, le procédé selon l'invention est caractérisé en ce que la distance $d_1$ est inférieure ou égale à 30 cm, de préférence 25 cm.

Selon une autre variante de l'invention, la distance d1 est inférieure ou égale à dix fois le diamètre d3 du jet d'oxydant primaire à mélange lent.

D'une manière générale, par rapport au débit de combustible, la somme des débits d'oxydant primaire et d'oxydant secondaire sera de préférence sensiblement stoechiométrique comprise dans un intervalle de $\pm$ 15%.

Selon une autre variante de l'invention, le jet d'oxydant secondaire est lui-même constitué d'une pluralité de jets d'oxydant secondaire.

La quantité d'oxydant secondaire sera de préférence comprise entre 0 % et 90 %, de préférence entre 10 % et 90 % de la quantité totale d'oxydant injectée.

Plus préférentiellement, la quantité totale d'oxydant secondaire est comprise entre 50 % et 90 % de la quantité totale d'oxydant injectée, l'oxydant primaire représentant une quantité comprise entre 10% et 50% de la quantité totale d'oxydant.

En général, la quantité totale d'oxydant secondaire sera de préférence comprise entre 60 % et 80 % de la quantité totale d'oxydant injectée, la quantité d'oxydant primaire étant comprise entre 20 % et 40% de cette même quantité totale.

Selon un mode de réalisation de l'invention, la somme des surfaces des sections droites des orifices d'injection d'oxydant secondaire est supérieure ou égale à 2,5cm$^2$.

De préférence, la distance entre le jet d'oxydant à mélange rapide de l'oxydant primaire et le jet d'oxydant secondaire sera égale à $d_2$, avec

$$d2 \geq 5D \text{ et } d2 \geq d1$$

et de préférence,

$$10 \text{ x } D \leq d_2 \leq 50 \text{ } D,$$

D étant le diamètre du cercle de même surface que la surface de l'injecteur d'oxydant secondaire à travers lequel le jet d'oxydant secondaire est injecté. Si on utilise un nombre i d'injecteurs d'oxydant secondaire (i pouvant varier de 1 à 25), placés à une distance d2i et de diamètre équivalent Di, d2i et Di doivent individuellement vérifier les formules ci-dessus.

Selon un autre aspect de l'invention, le (ou les) premier(s) jet(s) d'oxydant primaire à mélange rapide représente (nt) de 5 % à 40 % vol. de la quantité totale d'oxydant, tandis que le (ou les) second(s) jet(s) d'oxydant primaire à mélange lent représente(nt) de 5 % à 95 % vol. de la quantité totale d'oxydant, le complément éventuel d'oxydant étant apporté par les jets d'oxydant secondaires.

Selon un variante de réalisation, le second jet d'oxydant primaire à mélange lent est lui-même constitué d'une pluralité de jets.

Selon un autre aspect de l'invention, le second jet d'oxydant primaire est constitué de deux jets, sensiblement identiques, situés sensiblement à la même distance $d_1$ du premier jet d'oxydant primaire à mélange rapide, les trois jets d'oxydant étant sensiblement situés dans le même plan.

Selon une variante de l'invention, au moins un second jet d'oxydant primaire à mélange lent n'est pas situé dans le plan constitué par le premier jet d'oxydant primaire et le jet d'oxydant secondaire.

Lorsqu'on souhaite une bonne symétrie de l'ensemble de combustion, la pluralité de seconds jets d'oxydant primaire sera de préférence disposée de façon régulière autour du premier jet d'oxydant primaire, une autre altèrnative étant que la pluralité de seconds jets d'oxydant primaire sera disposée symétriquement par rapport à un plan contenant le premier jet d'oxydant primaire.

Les vitesses d'éjection des gaz sont bien entendu importantes à contrôler. Dans ce but, la vitesse d'injection du combustible sera de préférence comprise entre 20m/s et mach 2, et plus préférentiellement comprise entre 20m/s et 300 m/s.

Outre les différentes possibilités, bien connue en soi, pour injecter le combustible utilisé dans le procédé selon l'invention, le combustible peut être préchauffé avant d'être injecté. Un autre possibilité est que le combustible peut être pulsé, lors de son injection, la fréquence de ces pulsations étant de préférence comprise entre 0,1 et 3Hz et plus préférentiellement entre 0,1 et 1Hz. Pour plus de détails sur la manière d'injecter un fluide ou plusieurs fluides selon un mode dit « pulsé », on pourra se référer à l'article intitulé « Oscillating Combustion Technology Boosts Furnace Efficiency » de...Eric Streicher, Ovidiu Marin, Olivier Charon and Harley Borders, publié dans Industrial Heating, Février 2001, incorporé dans la présente demande à titre de référence.

De même, de nombreuses variantes sont possibles concernant l'injection de l'oxydant. En général, la vitesse d'injection de l'oxydant primaire à mélange rapide sera de préférence comprise entre 20m/s et Mach 2.

De préférence également, la vitesse d'injection de l'oxydant primaire à mélange lent sera comprise entre 10m/s et Mach 1.

Selon une variante préférentielle de l'invention, la vitesse d'injection de l'oxydant secondaire sera comprise entre 20m/s et Mach 2.

Afin de diminuer la consommation de combustible, l'un au moins des jets d'oxydant sera de préférence préchauffé avant son injection, sa vitesse d'injection pouvant atteindre au plus une vitesse de Mach 2.

Dans le cadre d'une combustion pulsée (avec la signification de ce terme telle que rappelé ci-dessus), il est également possible de réaliser cette pulsation sur l'un des jets au moins d'oxydant, sachant que le combustible peut alors être ou ne pas être « pulsée » lui-même, selon les résultats souhaités). Selon cette variante, l'un au moins des jets d'oxydant est injecté par pulsation, la fréquence de ces pulsations étant comprise entre 0,1 et 3Hz et de préférence 0,1 et 1 Hz.

La composition de l'oxydant peut être variable et selon les conditions ou les résultats souhaités, cette composition répondra, de préférence, à l'une au moins des exigences définies ci-après :

- l'oxydant secondaire pourra être constitué d'un mélange d'air, de préférence d'air préchauffé, et d'oxygène. D'une manière générale, l'oxydant, et plus particulièrement l'oxydant secondaire, pourra également être constituée d'un mélange de gaz ayant un caractère plus ou moins oxydant, comportant notamment de 5 à 100% d'oxygène (de préférence etre 10% et 100% vol.), de 0% à 95% de CO2, (de préférence entre 0 et 90% de CO2), de 0 à 80% d'azote (de préférence entre 0 et 70%), de 0 à 90% d'argon, avec au moins 3% d'oxygène dans le mélange. Le mélange pourra également contenir d'autres constituants et notamment de la vapeur d'eau et/ou des NOx et/ou SOx.

- l'air apportera de préférence 5% à 85% en volume du débit d'oxygène total de l'oxydant secondaire, le complément étant apporté par de l'air enrichi en oxygène ou de l'oxygène substantiellement pur.

- l'air constituera de préférence de 15 à 40% vol de l'oxygène total.

Selon une variante de l'invention, on a prévu d'injecter un seul combustible ou plusieurs combustibles, qui peuvent être de même nature (différents gaz par exemple) et/ou de nature différente (gaz et fiouls, par exemple)

L'invention concerne également un ensemble de combustion qui permet notamment de mettre en oeuvre le procédé selon l'invention. Ainsi, l'invention concerne un ensemble de combustion à injections séparées constitué d'un bloc comportant au moins un orifice pour l'injection de combustible et au moins un orifice pour l'injection d'oxydant, et qui est caractérisé en ce que l'orifice d'injection de combustible comporte au moins un axe de symétrie longitudinal, dans la direction d'écoulement du combustible, un premier injecteur d'oxydant qui comporte également un axe de symétrie longitudinal, étant disposé dans l'orifice d'injection de combustible, les deux axes de symétrie longitudinaux étant sensiblement parallèles, un second orifice d'injection d'oxydant étant disposé à une distance $d_1$ de l'axe de symétrie du premier injecteur d'oxydant, avec $d_1 \leq 30$ cm.

Cet ensemble comportera au moins un second bloc dans lequel est prévu un troisième orifice d'injection d'oxydant de diamètre D, disposé à une distance $d_2$ de l'axe de symétrie du premier injecteur d'oxydant, avec :

$$D2 \geq 5D \text{ et } d2 \geq d1,$$

et de préférence,

$$10 \times D \leq d_2 \leq 50 \times D$$

Selon un variante de l'invention, $d1 \leq 10 \times d3$, $d3$ étant le diamètre du jet d'oxydant primaire à mélange lent (ou son équivalent si la section de l'injecteur n'est pas circulaire, tandis que, de préférence $D \geq 0,5$ cm.

De préférence, le bloc de l'ensemble de combustion comportera une pluralité d'orifices d'injection de combustible ainsi que de préférence, une pluralité de premiers injecteurs d'oxydant, et/ou une pluralité de second orifices d'injection d'oxydant.

Selon un variante de réalisation, au moins un orifice d'injection de combustible comportera un injecteur de combustible liquide, tandis que selon un autre variante de l'invention, le bloc pourra comporter plusieurs orifices distincts d'injection de combustible, pour l'injection d'un ou plusieurs combustibles.

Selon un mode avantageux de réalisation, l'ensemble selon l'invention comportera de préférence une première vanne de répartition de l'oxydant total qui débouche d'une part sur une canalisation d'oxydant primaire et d'autre part sur une canalisation d'oxydant secondaire reliée au troisième orifice d'injection d'oxydant, la canalisation d'oxydant primaire étant reliée à une seconde vanne de répartition qui est reliée d'une part au premier injecteur d'oxydant et d'autre part au second orifice d'injection d'oxydant.

Selon une variante de réalisation de l'invention, le troisième orifice d'injection d'oxydant secondaire pourra être un injecteur à double section (ou multi-sections), de manière à pouvoir faire varier la vitesse et la quantité de mouvement de l'oxydant sans modifier le débit de l'oxydant.

**[0048]** - Dans le cas où le même oxydant est utilisé comme oxydant primaire et secondaire, c'est à dire notamment lorsqu'on pratique une combustion de type étagé, les sections des injecteurs d'oxydant secondaire doivent être telles que la quantité de mouvement totale des différents jets d'oxydants introduits par le brûleur soit supérieure pour un taux d'étagement de 50% à sa valeur correspondante pour un taux d'étagement égal à zéro.

(La quantité de mouvement totale, également appelée impulsion totale, est calculée comme la somme des produits de la vitesse de chaque jet d'oxydant par son débit massique, en prenant en compte tous les jets d'oxydant introduit par le brûleur).

L'avantage des caractéristiques décrites ci-dessus est que pour un degré d'étagement supérieur à 50%, la longueur de la flamme et l'impulsion augmentent simultanément avec le degré d'étagement, contrairement à la technique consistant à changer de canne d'injection. Dans le cas où le brûleur n'utilise qu'un même type d'oxydant, on appelle taux d'étagement le rapport entre le débit des jets secondaires d'oxydant et le débit total (primaire plus secondaire) d'oxydant. Si l'un des oxydants est différent de l'autre, par exemple air et oxydant, on ne comptabilisera dans le rapport des débits que la proportion d'oxygène ou d'oxydant dans chacun des jets. La mise en oeuvre d'un paramètre permettant d'augmenter simultanément la longueur de la flamme et l'impulsion totale du brûleur permet un contrôle précis de la position de transfert thermique maximale.

Selon l'invention, on utilise de préférence un deuxième paramètre de réglage qui consiste à diviser le débit d'oxygène primaire entre un débit assurant un mélange très rapide avec le combustible, et un débit assurant un mélange comparativement plus lent. Ce deuxième paramètre de réglage peut donc être choisi comme la fraction de l'oxygène primaire introduite par l'injection à mélange rapide.

L'invention sera mieux comprise à l'aide des exemples de réalisations suivants, conjointement avec les figures qui représentent :

La figure 1, des courbes donnant la valeur du flux thermique dans l'axe de la flamme d'un brûleur de type connu de 1MW en fonction de sa position dans le four. (L'abscisse de la figure 1 est comptée à partir de la paroi interne du four coïncidant avec la face interne du brûleur. La direction aval est donc vers les longueurs axiales croissantes).
La figure 2, un profil axial de température de voûte en fonction de la longueur de la flamme,

Sur la figure 1 sont représentées des courbes donnant le flux thermique de la flamme (en kW/m$^2$) en fonction

de la distance longitudinale sur le four (en m). Le brûleur oxycombustible (non représenté) est placé sur la paroi arrière du four (abscisse 0).

La courbe 1 représente le flux thermique pour une flamme à très faible quantité de mouvement (« very low momentum »). Ceci correspond à la flamme 4 dont la partie visible est assez longue.

La courbe 2 représente le flux thermique d'une flamme 5 (toutes choses égales par ailleurs) à faible quantité de mouvement, cette flamme 5 étant un peu moins longue la flamme 4.

La courbe 3 représente le flux thermique d'une flamme 6 (toutes choses égales par ailleurs) ayant une forte quantité de mouvement (« high momentum »), flamme 6 qui est plus courte que la flamme 5. On remarque que le point le plus chaud de ces flammes (respectivement A pour la flamme 4, B pour la flamme 5 et C pour la flamme 6) s'éloigne du nez du brûleur (paroi arrière du four), tandis que la longueur de la flamme (visible) diminue lorsque la quantité de mouvement (ou l'impulsion de la flamme) augmente. (Courbes comparatives réalisées à partir d'un brûleur de 1MW vendu par la Titulaire sous la dénomination commerciale « ALGLASS ».

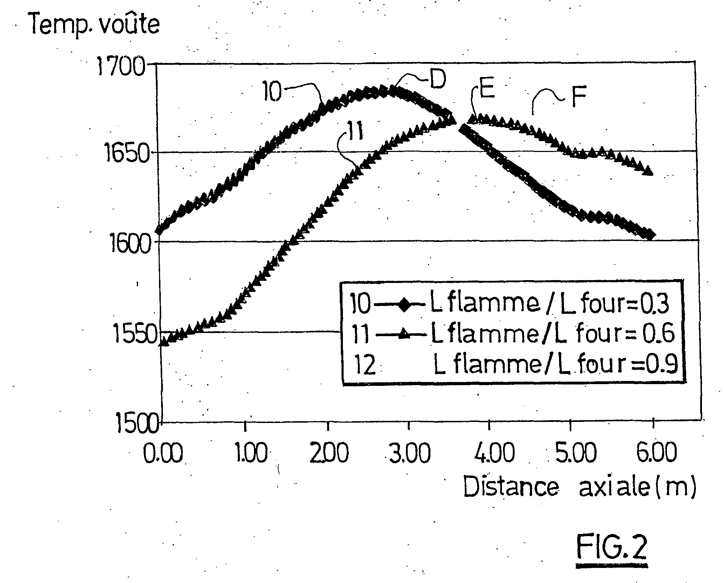

Sur la figure 2 sont représentées trois courbes donnant la température de voûte d'un même four en fonction de la longueur de la flamme réalisée, chaque flamme ayant cependant une même impulsion (impulsion basse-vitesse moyenne égale à 30m/s pour les trois flammes). Le brûleur utilisée est un brûleur 2MW du même type que précédemment. Pour une flamme courte 10, le maximum de température D est à environ 3m de la paroi arrière du four, tandis que l'augmentation de la longueur de flamme permet de déplacer le maximum de température de voûte en direction de la paroi avant du four (E, maximum de température pour la courbe 11, est situé à un peu moins de 4m de la paroi arrière du four, tandis que F maximum de température de la courbe 12 est situé à environ 4,50m de la même paroi).

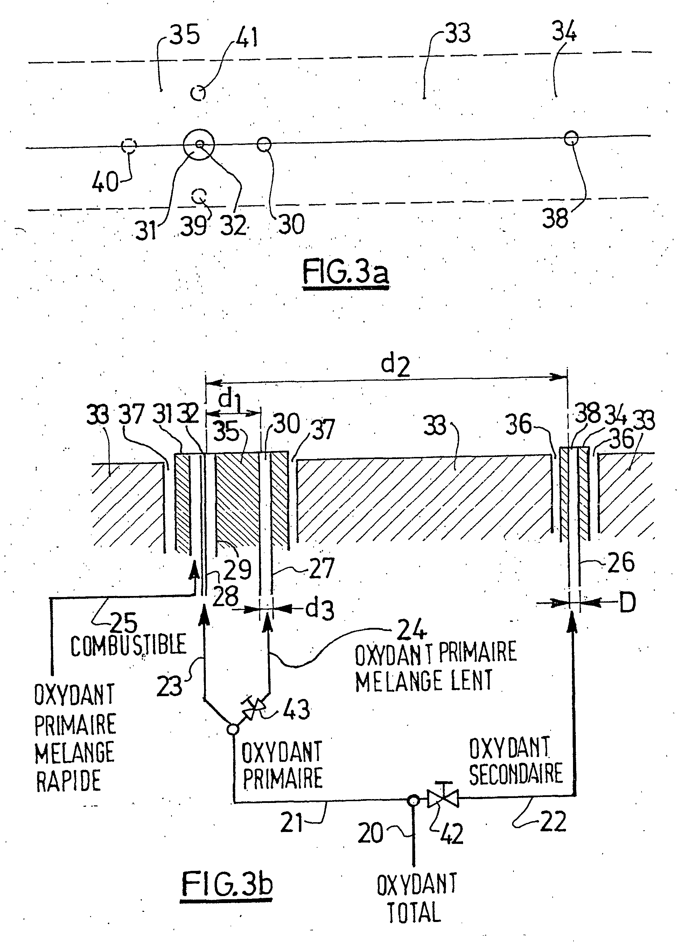

La figure 3 représente une vue schématique partielle de dessus (fig. 3a) et en coupe (fig. 3b) d'un exemple d'un ensemble de combustion selon l'invention pour la mise en oeuvre du procédé selon l'invention.

L'ensemble de combustion est ici placé dans un bloc réfractaire 33, dans lequel ont été placés deux blocs respectivement 34 et 35.

Le bloc 34 de préférence cylindrique est percé d'une canalisation (ou injecteur) 26 dont l'orifice débouche en 38 du bloc. Cette canalisation ou injecteur 26 (éventuellement un injecteur métallique cylindrique creux peut être glissé dans l'alésage cylindrique 26) a un diamètre (en 38) égal à D (si l'injecteur n'est pas cylindrique, D représente le diamètre du cercle de même surface que la section de l'injecteur en 38). Ce bloc 34 est glissé dans la chemise cylindrique 36 dans le bloc 33. La canalisation 26 reçoit l'oxydant dit secondaire 22.

Le bloc 35 comporte une canalisation 28 pour injecter l'oxydant primaire à mélange rapide 23, la canalisation 28 étant disposée concentriquement dans la canalisation (ou injecteur) 29 dans laquelle le combustible 25 est injecté. Disposé à une distance d1 se trouve l'injecteur (ou canalisation 27 dans laquelle est injecté l'oxydant primaire à mélange lent. Cet injecteur 27 a une section de diamètre d3 en 30, là où débouche ledit injecteur 27 (d3 est le diamètre équivalent comme défini ci-avant si la section n'est pas circulaire). Le bloc 35 est logé dans l'alésage 37. La canalisation 20 d'oxydant total se sépare en une canalisation d'oxydant primaire 21 et une canalisation d'oxydant secondaire 22 dans laquelle est placée une première vanne de commande 42 permettant de répartir le débit d'oxydant entre 21 et 22 (en fonction bien sur des diamètres respectifs desdites canalisations). Il est aussi possible de placer 42 dans le bras de canalisation 21 si l'on ne souhaite pas avoir un réglage incluant le cas où le débit d'oxygène secondaire peut être nul. La canalisation 21 se sépare elle-même en deux canalisations 23 et 24 avec une vanne 43 dans l'une d'entre elles selon que l'on veut pouvoir annuler le débit d'oxydant dans la branche 23 ou la branche 24. (On peut bien sur prévoir une vanne dans chacune de ces branches, de même que l'on peut prévoir une vanne dans la branche 21 en plus de celle de la vanne 42 dans la branche 22.

Pour le fonctionnement de ce système, on peut répartir l'oxygène entre les différentes canalisations selon les résultats que l'on veut obtenir, canalisations ayant des diamètres respectifs tels que l'on obtienne les vitesses d'injection d'oxygène différentes ou identiques dans les différents injecteurs.

Bien entendu, on peut placer l'injecteur 27 de telle manière que son extrémité 30 soit située en 39 ou 40 ou 41 ou en un endroit quelconque sur le cercle de rayon d1. Il est également possible d'avoir simultanément plusieurs orifices 30 et/ou 39 et/ou 40 et/ou 41, dont les injecteurs sont reliés entre eux et l'oxygène à mélange lent réparti dans ces différents injecteurs. On peut ainsi créer également un brûleur/injecteur d'oxydant à vitesse supersonique, en prévoyant un injecteur 28 ayant une extrémité proche de 32 en forme de convergent/divergent (tuyère dite de Laval), en modifiant ou non les proportions relatives d'oxygène et de combustible selon ce que l'on veut obtenir. Ainsi avec 28 équipé d'une tuyère supersonique, on peut soit injecter de l'oxydant seul, à vitesse supersonique, à travers 28 et 32, soit entourer cet jet supersonique d'une flamme qui sera réalisée à l'aide d'une injection subsonique à travers 29 de combustible et 27 d'oxydant, éventuellement complété par une injection d'oxydant à travers 26, soit réaliser une flamme subsonique seulement à l'aide de 29 et 27 (plus 26 si nécessaire ou souhaité).

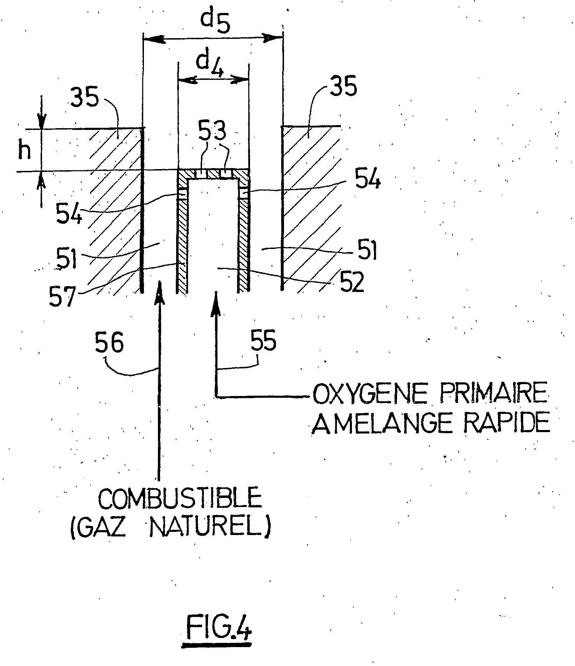

La figure 4 représente un détail d'une variante de réalisation de l'injection de l'oxydant primaire à mélange rapide et du combustible, lorsque celui-ci est du gaz naturel.

Le bloc réfractaire 35 comporte un alésage 51 de diamètre d5 (ou diamètre du cercle de surface équivalente). Dans cet espace 51 est disposé un injecteur 52 de gaz naturel de préférence cylindrique de diamètre d4, inséré en retrait de telle manière qu'il y ait une distance h entre le sommet de cet injecteur 52 et la surface du bloc réfractaire 35. L'injecteur 52 est creux pour être alimenté en oxydant et comporte de préférence au moins un trou 53 dans sa surface supérieure et/ou au moins un trou 54 dans sa paroi latérale (verticale sur la figure 4).

Le gaz naturel 56 est injecté dans l'espace annulaire restant entre les parois verticales de l'alésage 51 et les parois verticales 57 de l'injecteur 52, entre lesquelles est injecté l'oxydant.

(S'il on utilise du fioul comme combustible, l'oxygène primaire à mélange rapide sera le fluide de pulvérisation du fioul, cet oxygène étant éventuellement utilisé avec de l'air comme fluide de pulvérisation).

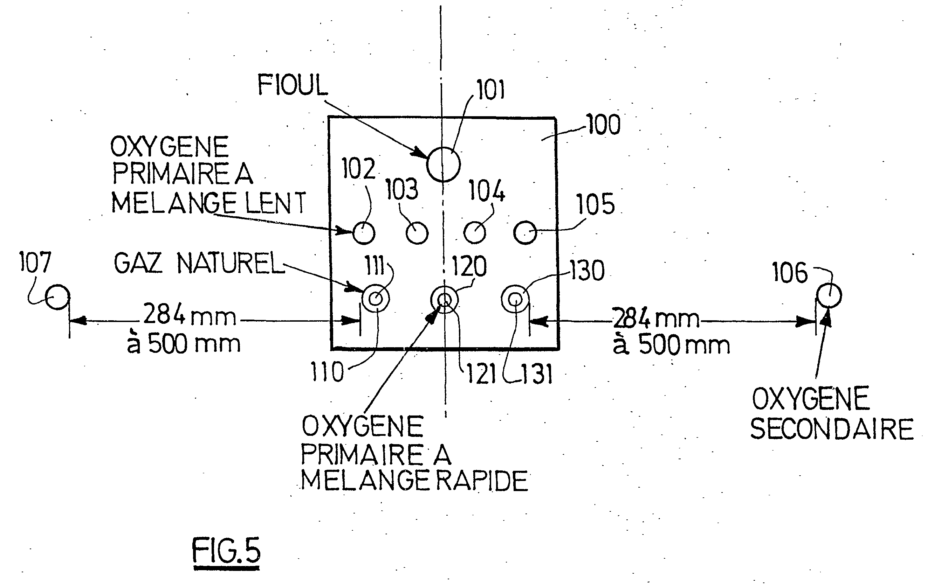

La figure 5 représente une variante de réalisation de l'invention sous forme schématique, uniquement.

Le bloc réfractaire 100 comporte en partie supérieure, un orifice d'injection de fioul liquide 101 si l'on veut faire fonctionner le système de combustion avec tout ou partie de fioul. Disposés sur une rangée horizontale placée sous l'orifice 101, se trouvent une pluralité d'orifices d'injection d'oxygène primaire à mélange lent 102, 103, 104, 105.

Disposés dans la partie inférieure du bloc 100, se trouve une rangée de trois (il peut y en avoir plus ou moins) ensembles d'orifices concentriques 110, 111, 120, 121, 130, 131, respectivement d'injection de combustible tel que gaz naturel et d'oxydant tel qu'oxygène primaire à mélange rapide (voir figure 3 pour plus de détails). A une distance d2 sont disposés de part et d'autre du bloc (par exemple mais non nécessairement des orifices 106 et 107 d'injection d'oxygène.

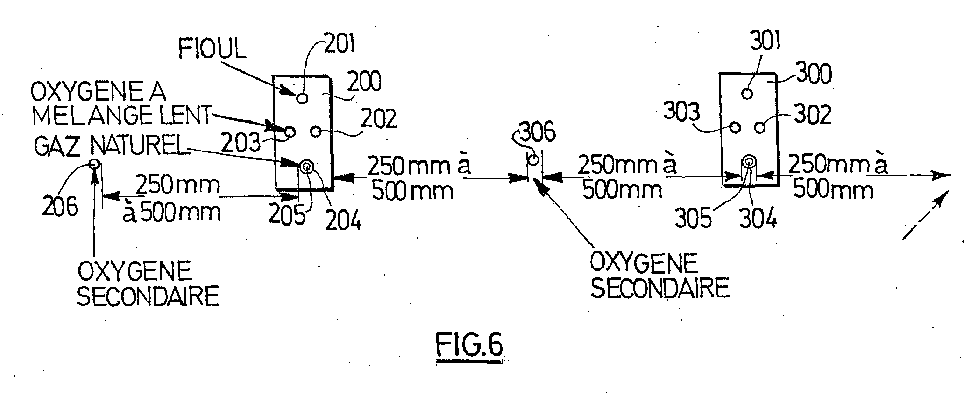

La figure 6 représente une variante schématique de mise en oeuvre du système selon l'invention comportant deux blocs réfractaires 200, 300 comportant de haut en bas un orifice d'injection de fioul 201 respectivement, 301, deux orifices d'injection de gaz naturel 202, 203 respectivement 302, 303, deux orifices coaxiaux d'injection d'oxygène au centre et de combustible annulairement 205, 204 respectivement 305, 304 et une injection d'oxygène secondaire dans un injecteur 206, respectivement 306, disposé à une distance d2 des orifices coaxiaux.

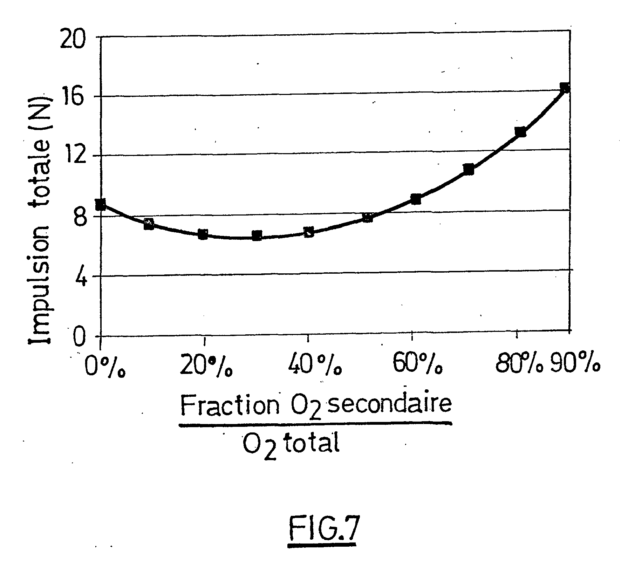

La figure 7 représente l'impulsion totale de la flamme en fonction du ratio représentant la fraction de la quantité d'oxygène secondaire divisée par la quantité d'oxygène total. Cette impulsion présente un minimum pour un ratio d'environ 30% et augmente ensuite atteignant des valeurs plus grandes que la valeur de l'impulsion lorsqu'il n'y a pas d'injection d'oxygène secondaire, pour un ratio supérieur à 60%.

## Revendications

1. Procédé de combustion dans un four dans lequel on injecte séparément au moins un combustible et au moins un oxydant, le jet d'oxydant comportant un jet d'oxydant primaire et un jet d'oxydant secondaire, le jet d'oxydant primaire étant injecté à proximité du combustible de manière à engendrer une première combustion incomplète, les gaz issus de cette première combustion comportant encore au moins une partie du combustible, tandis que le jet d'oxydant secondaire est injecté à une distance du jet de combustible qui est supérieure à la distance entre le jet de combustible et le jet d'oxydant primaire le plus proche du jet de combustible, de manière à entrer en combustion avec la partie de combustible diluée notamment par les gaz de la première combustion et qui n'a pas encore réagi avec de l'oxydant, **caractérisé en ce que** le jet d'oxydant primaire est lui-même divisé en au moins deux jets primaires, au moins un premier jet d'oxydant primaire à mélange rapide, injecté dans le jet de combustible, de manière à provoquer rapidement une réaction de combustion avec le combustible qui l'entoure, et au moins un second jet d'oxydant primaire à mélange lent injecté à une distance d1 du premier jet d'oxydant primaire, de manière à se mélanger moins rapidement au jet de combustible que l'un au moins des jets d'oxydant primaire à mélange rapide.

2. Procédé selon la revendication 1, **caractérisé en ce que** la distance $d_1$ est inférieure ou égale à 30 cm, de préférence 25 cm.

3. Procédé selon la revendication 1, **caractérisé en ce que** la distance d1 est inférieure ou égale à dix fois le diamètre d3 du jet d'oxydant primaire à mélange lent.

4. Procédé selon l'une des revendications 1 à 3, **caractérisé en ce que** la somme des débits d'oxydant primaire et d'oxydant secondaire est sensiblement stoechiométrique par rapport au débit de combustible, comprise de préférence dans un intervalle de $\pm$ 15% par rapport au débit stoéchiométrique.

5. Procédé selon l'une des revendications 1 à 4, **caractérisé en ce que** le jet d'oxydant secondaire est lui-même constitué d'une pluralité de jets d'oxydant secondaire.

6. Procédé selon l'une des revendications 1 à 5, **caractérisé en ce que** la quantité d'oxydant secondaire est comprise entre 0 % et 90 %, de préférence entre 10 % et 90 % de la quantité totale d'oxydant injectée.

**7.** Procédé selon l'une des revendications 1 à 6, **caractérisé en ce que** la quantité totale d'oxydant secondaire est comprise entre 50 % et 90 % de la quantité totale d'oxydant injectée, l'oxydant primaire représentant une quantité comprise entre 10% et 50% de la quantité totale d'oxydant.

**8.** Procédé selon la revendication 7, **caractérisé en ce que** la quantité totale d'oxydant secondaire est comprise entre 60 % et 80 % de la quantité totale d'oxydant injectée, la quantité d'oxydant primaire étant comprise entre 20 % et 40% de cette même quantité totale.

**9.** Procédé selon l'une des revendications 1 à 8, **caractérisé en ce que** la somme des surfaces des sections droites des orifices d'injection d'oxydant secondaire est supérieure ou égale à 2,5cm$^2$.

**10.** Procédé selon la revendication 9, **caractérisé en ce que** la distance entre le jet d'oxydant à mélange rapide de l'oxydant primaire et le jet d'oxydant secondaire est égale à $d_2$, avec
d2 $\geq$ 5D et d2 $\geq$ d1 et de préférence,
10 x D $\leq d_2 \leq$ 50 D,D étant le diamètre du cercle de même surface que la surface de l'injecteur secondaire à travers lequel le jet d'oxydant secondaire est injecté.

**11.** Procédé selon l'une des revendications 1 à 10, **caractérisé en ce que** le (ou les) premier(s) jet(s) d'oxydant primaire à mélange rapide représente(nt) de 5 % à 40 % vol. de la quantité totale d'oxydant, tandis que le (ou les) second(s) jet(s) d'oxydant primaire à mélange lent représente (nt) de 5 % à 95 % vol. de la quantité totale d'oxydant, le complément éventuel d'oxydant étant apporté par les jets d'oxydant secondaires.

**12.** Procédé selon l'une des revendications précédentes, **caractérisé en ce que** le second jet d'oxydant primaire à mélange lent est lui-même constitué d'une pluralité de jets.

**13.** Procédé selon la revendication 12, **caractérisé en ce que** le second jet d'oxydant primaire est constitué de deux jets, sensiblement identiques, situés sensiblement à la même distance $d_1$ du premier jet d'oxydant primaire à mélange rapide, les trois jets d'oxydant étant sensiblement situés dans le même plan:

**14.** Procédé selon l'une des revendications 1 à 13, **caractérisé en ce que** au moins un second jet d'oxydant primaire à mélange lent n'est pas situé dans le plan constitué par le premier jet d'oxydant primaire et le jet d'oxydant secondaire.

**15.** Procédé selon l'une des revendications 1 à 14, **caractérisé en ce que** la pluralité de seconds jets d'oxydant primaire est disposée de façon régulière autour du premier jet d'oxydant primaire.

**16.** Procédé selon la revendication 15, **caractérisé en ce que** la pluralité de seconds jets d'oxydant primaire est disposée symétriquement par rapport à un plan contenant le premier jet d'oxydant primaire.

**17.** Procédé selon l'une des revendications 1 à 16, **caractérisé en ce que** la vitesse d'injection du combustible est supérieure à 20m/s et de préférence inférieure ou égale à mach 2.

**18.** Procédé selon la revendication 17, **caractérisé en ce que** la vitesse d'injection du combustible est comprise entre 20 m/s et 300 m/s.

**19.** Procédé selon l'une des revendications 17 ou 18, **caractérisé en ce que** le combustible peut être préchauffé avant d'être injecté.

**20.** Procédé selon l'une des revendications 17 à 19, **caractérisé en ce que** le combustible est pulsé lors de son injection, la fréquence de ces pulsations étant de préférence comprise entre 0,1 et 3Hz et plus préférentiellement entre 0,1 et 1Hz.

**21.** Procédé selon l'une des revendications 1 à 20, **caractérisé en ce que** la vitesse d'injection de l'oxydant primaire à mélange rapide est comprise entre 20m/s et Mach 2.

**22.** Procédé selon l'une des revendications 1 à 21, **caractérisé en ce que** la vitesse d'injection de l'oxydant primaire à mélange lent est comprise entre 10m/s et Mach 1.

**23.** Procédé selon l'une des revendications 1 à 22, **caractérisé en ce que** la vitesse d'injection de l'oxydant secondaire est comprise entre 20m/s et Mach 2.

24. Procédé selon l'une des revendications 1 à 20, **caractérisé en ce que** l'un au moins des jets d'oxydant est préchauffé avant son injection, sa vitesse d'injection pouvant atteindre au plus une vitesse de mach 2.

25. Procédé selon l'une des revendications précédentes, **caractérisé en ce que** l'un au moins des jets d'oxydant est injecté par pulsation, la fréquence de ces pulsations étant comprise entre 0,1 et 3Hz et de préférence 0,1 et 1 Hz.

26. Procédé selon l'une des revendications précédentes, **caractérisé en ce que** l'oxydant secondaire est constitué d'un mélange d'air, de préférence d'air préchauffé, et d'oxygène.

27. Procédé selon la revendication 26, **caractérisé en ce que** l'air apporte de 5% à 80% en volume de l'oxygène total de l'oxydant secondaire, le complément étant apporté par de l'air enrichi en oxygène ou de l'oxygène substantiellement pur.

28. Procédé selon la revendication 27, **caractérisé en ce que** l'air constitue de 15 à 40% vol de l'oxygène total.

29. Procédé selon l'une des revendications précédentes, **caractérisé en ce que** l'on injecte un seul combustible ou plusieurs combustibles différents.

30. Ensemble brûleur à injection séparée constitué d'un.bloc comportant au moins un orifice pour l'injection de combustible et au moins un orifice pour l'injection d'oxydant, ensemble brûleur dans lequel l'orifice d'injection de combustible comporte au moins un axe de symétrie longitudinal, dans la direction d'écoulement du combustible, un premier injecteur d'oxydant qui comporte également un axe de symétrie longitudinal, étant disposé dans l'orifice d'injection de combustible, les deux axes de symétrie longitudinaux étant sensiblement parallèles, un second orifice d'injection d'oxydant étant disposé à une distance $d_1$ de l'axe de symétrie du premier injecteur d'oxydant, **caractérisé en ce qu'**il comporte au moins un second bloc dans lequel est prévu un troisième orifice d'injection d'oxydant de diamètre D et qui est disposé à une distance $d_2$ de l'axe de symétrie du premier injecteur d'oxydant, avec $d_1 \leq 30$ cm, $d2 \geq 5D$ et $d2 \geq d1$.

31. Ensemble selon la revendication 30, dans lequel $10 \times D \leq d_2 \leq 50 \times D$.

32. Ensemble selon l'une des revendications 30 ou 31, **caractérisé en ce que** d1 ≤ 10 d3.

33. Procédé selon la revendication 31 ou 32, **caractérisé en ce que** D ≥ 0,5 cm.

34. Ensemble selon l'une des revendications 30 à 33, **caractérisé en ce que** le bloc comporte une pluralité d'orifices d'injection de combustible.

35. Ensemble selon l'une des revendications 30 à 34, **caractérisé en ce que** le bloc comporte une pluralité de premiers injecteurs d'oxydant.

36. Ensemble selon l'une des revendications 30 à 35, **caractérisé en ce que** le bloc comporte une pluralité de second orifices d'injection d'oxydant.

37. Ensemble selon l'une des revendications 30 à 36, **caractérisé en ce que** l'orifice d'injection de combustible comporte un injecteur de fioul lourd.

38. Ensemble selon l'une des revendications 30 à 37, **caractérisé en ce qu'**il comporte plusieurs orifices distincts d'injection de combustible, pour l'injection d'un ou plusieurs combustibles.

39. Ensemble selon l'une des revendications 30 à 38, **caractérisé en ce qu'**il comporte une première vanne de répartition de l'oxydant total qui débouche d'une part sur une canalisation d'oxydant primaire et d'autre part sur une canalisation d'oxydant secondaire relié au troisième orifice d'injection d'oxydant, la canalisation d'oxydant primaire étant reliée à une seconde vanne de répartition qui est reliée d'une part au premier injecteur d'oxydant et d'autre part au second orifice d'injection d'oxydant.

40. Ensemble selon l'une des revendications 30 à 39, **caractérisé en ce que** le troisième orifice d'injection d'oxydant secondaire est un injecteur à double section, de manière à pouvoir faire varier la vitesse et la quantité de mouvement de l'oxydant sans modifier la pression de l'oxydant en amont de cet injecteur.

**Patentansprüche**

1. Verfahren zur Verbrennung in einem Ofen, in den getrennt mindestens ein Kraftstoff und mindestens ein Oxidationsmittel eingespritzt wird, wobei der Oxidationsmittelstrahl einen primären Oxidationsmittelstrahl und einen sekundären Oxidationsmittelstrahl umfasst, wobei der primäre Oxidationsmittelstrahl in der Nähe des Kraftstoffs eingespritzt wird, um eine erste unvollständige Verbrennung zu erzeugen, wobei die Gase, die aus dieser ersten Verbrennung stammen, noch mindestens einen Teil des Kraftstoffs umfassen, während der sekundäre Oxidationsmittelstrahl in einem Abstand vom Kraftstoffstrahl eingespritzt wird, der größer als der Abstand zwischen dem Kraftstoffstrahl und dem primären Oxidationsmittelstrahl ist, der dem Kraftstoffstrahl am nächsten gelegen ist, um mit dem Kraftstoffteil zu verbrennen, der insbesondere durch die Gase der ersten Verbrennung verdünnt ist, und der noch nicht mit dem Oxidationsmittel reagiert hat, **dadurch gekennzeichnet, dass** der primäre Oxidationsmittelstrahl selbst in mindestens zwei primäre Strahlen geteilt ist, mindestens einen ersten primären Oxidationsmittelstrahl mit schneller Mischung, der in den Kraftstoffstrahl eingespritzt wird, um schnell eine Verbrennungsraktion mit dem Kraftstoff, der ihn umgibt, hervorzurufen, und mindestens einen zweiten primären Oxidationsmittelstrahl mit langsamer Mischung, der in einem Abstand d1 vom ersten primären Oxidationsmittelstrahl eingespritzt wird, um sich weniger schnell mit dem Kraftstoffstrahl zu mischen als mindestens einer der primären Oxidationsmittelstrahlen mit schneller Mischung.

2. Verfahren nach Anspruch 1, **dadurch gekennzeichnet, dass** der Abstand d1 kleiner oder gleich 30 cm, vorzugsweise 25 cm ist.

3. Verfahren nach Anspruch 1, **dadurch gekennzeichnet, dass** der Abstand d1 kleiner oder gleich zehnmal dem Durchmesser d3 des primären Oxidationsmittelstrahls mit langsamer Mischung ist.

4. Verfahren nach einem der Ansprüche 1 bis 3, **dadurch gekennzeichnet, dass** die Summe der Durchsätze von primärem Oxidationsmittel und sekundärem Oxidationsmittel im Wesentlichen stöchiometrisch mit Bezug auf den Durchsatz von Kraftstoff ist, der im Wesentlichen in einem Intervall von $\pm$ 15 % mit Bezug auf den stöchiometrischen Durchsatz enthalten ist.

5. Verfahren nach einem der Ansprüche 1 bis 4, **dadurch gekennzeichnet, dass** der sekundäre Oxidationsmittelstrahl selbst aus einer Vielzahl von sekundären Oxidationsmittelstrahlen besteht.

6. Verfahren nach einem der Ansprüche 1 bis 5, **dadurch gekennzeichnet, dass** die Menge von sekundärem Oxidationsmittel zwischen 0 % und 90 %, vorzugsweise zwischen 10 % und 90 % der Gesamtmenge von eingespritztem Oxidationsmittel liegt.

7. Verfahren nach einem der Ansprüche 1 bis 6, **dadurch gekennzeichnet, dass** die Gesamtmenge von sekundärem Oxidationsmittel zwischen 50 % und 90 % der Gesamtmenge von eingespritztem Oxidationsmittel liegt, wobei das primäre Oxidationsmittel eine Menge aufweist, die zwischen 10 % und 50 % der Gesamtmenge von eingespritztem Oxidationsmittel liegt.

8. Verfahren nach Anspruch 7, **dadurch gekennzeichnet, dass** die Gesamtmenge von sekundärem Oxidationsmittel zwischen 60 % und 80 % der Gesamtmenge von eingespritztem Oxidationsmittel liegt, wobei die Menge von primärem Oxidationsmittel zwischen 20 % und 40 % dieser gleichen Gesamtmenge liegt.

9. Verfahren nach einem der Ansprüche 1 bis 8, **dadurch gekennzeichnet, dass** die Summe der Oberflächen der rechten Abschnitte der Öffnungen zum Einspritzen von sekundärem Oxidationsmittel größer oder gleich 2,5 $cm^2$ ist.

10. Verfahren nach Anspruch 9, **dadurch gekennzeichnet, dass** der Abstand zwischen dem Oxidationsmittelstrahl mit schneller Mischung des primären Oxidationsmittels und dem sekundärem Oxidationsmittelstrahl gleich $d_2$ ist, wobei
d2 $\geq$ 5D und d2 $\geq$ d1 und vorzugsweise
10 x D $\leq d_2 \leq$ 50 D, wobei D der Durchmesser des Kreises mit der gleichen Oberfläche wie der Oberfläche der sekundären Einspritzvorrichtung ist, über die der sekundäre Oxidationsmittelstrahl eingespritzt wird.

**11.** Verfahren nach einem der Ansprüche 1 bis 10, **dadurch gekennzeichnet, dass** der (oder die) erste(n) primäre(n) Oxidationsmittelstrahl(en) mit schneller Mischung von 5 Vol.% bis 40 Vol.% der Gesamtmenge von Oxidationsmittel darstellt/darstellen, während der (oder die) zweiten primäre(n) Oxidationsmittelstrahl(en) mit langsamer Mischung von 5 Vol.% bis 95 Vol.% der Gesamtmenge von Oxidationsmittel darstellt/darstellen, wobei der eventuelle Zusatz von Oxidationsmittel von den sekundäre Oxidationsmittelstrahlen zugeführt wird.

**12.** Verfahren nach einem der vorhergehednen Ansprüche, **dadurch gekennzeichnet, dass** der zweite primäre Oxidatinsmittelstrahl mit langsamer Mischung selbst aus einer Vielzahl von Strahlen besteht.

**13.** Verfahren nach Anspruch 12, **dadurch gekennzeichnet, dass** der zweite primärem Oxidationsmittelstrahl aus zwei Strahlen, im Wesentlichen identisch, besteht, die sich im Wesentlichen im gleichen Abstand d1 vom ersten primärem Oxidationsmittelstrahl mit schneller Mischung befinden, wobei sich die drei Oxidationsmittelstrahlen im Wesentlichen auf der gleichen Ebene befinden.

**14.** Verfahren nach einem der Ansprüche 1 bis 13, **dadurch gekennzeichnet, dass** sich mindestens ein zweiter primärer Oxidatinsmittelstrahl mit langsamer Mischung sich nicht auf der Ebene befindet, die aus dem ersten primären Oxidationsmittelstrahl und dem sekundären Oxidationsmittelstrahl besteht.

**15.** Verfahren nach einem der Ansprüche 1 bis 14, **dadurch gekennzeichnet, dass** die Vielzahl der zweiten primären Oxidationsmittelstrahlen auf regelmäßige Weise um den ersten primären Oxidationsmittelstrahl angeordnet ist.

**16.** Verfahren nach Anspruch 15, **dadurch gekennzeichnet, dass** die Vielzahl von zweiten primären Oxidationsmittelstrahlen symmetrisch mit Bezug auf eine Ebene angeordnet ist, die den ersten primären Oxidationsmittelstrahl umfasst.

**17.** Verfahren nach einem der Ansprüche 1 bis 16, **dadurch gekennzeichnet, dass** die Geschwindigkeit des Einspritzens von Kraftstoff größer als 20 m/s und vorzugsweise kleiner oder gleich Mach 2 ist.

**18.** Verfahren nach Anspruch 17, **dadurch gekennzeichnet, dass** die Geschwindigkeit des Einspritzens von Kraftstoff zwischen 20 m/s und 300 m/s liegt.

**19.** Verfahren nach einem der Ansprüche 17 oder 18, **dadurch gekennzeichnet, dass** der Kraftstoff vorgeheizt werden kann, bevor er eingespritzt wird.

**20.** Verfahren nach einem der Ansprüche 17 bis 19, **dadurch gekennzeichnet, dass** der Kraftstoff bei seiner Einspritzung pulsiert wird, wobei die Frequenz der Pulsierungen vorzugsweise zwischen 0,1 und 3 Hz und insbesondere zwischen 0,1 und 1 Hz liegt.

**21.** Verfahren nach einem der Ansprüche 1 bis 20, **dadurch gekennzeichnet, dass** die Geschwindigkeit der Einspritzung von primärem Oxidationsmittel mit schneller Mischung zwischen 20 m/s und Mach 2 liegt.

**22.** Verfahren nach einem der Ansprüche 1 bis 21, **dadurch gekennzeichnet, dass** die Geschwindigkeit der Einspritzung von primärem Oxidationsmittel mit langsamer Mischung zwischen 10 m/s und Mach 1 liegt.

**23.** Verfahren nach einem der Ansprüche 1 bis 22, **dadurch gekennzeichnet, dass** die Geschwindigkeit der Einspritzung von sekundärem Oxidationsmittel zwischen 20 m/s und Mach 2 liegt.

**24.** Verfahren nach einem der Ansprüche 1 bis 20, **dadurch gekennzeichnet, dass** mindestens einer der Oxidationsmittelstrahlen vor seiner Einspritzung vorgeheizt wird, wobei die Geschwindigkeit seiner Einspritzung höchstens eine Geschwindigkeit von Mach 2 erreichen kann.

**25.** Verfahren nach einem der vorhergehenden Ansprüche, **dadurch gekennzeichnet, dass** mindestens einer der Oxidationsmittelstrahlen durch Pulsierung eingespritzt wird, wobei die Frequenz dieser Pulsierungen zwischen 0,1 und 3 Hz und vorzugsweise 0,1 und 1 Hz liegt.

**26.** Verfahren nach einem der vorhergehenden Ansprüche, **dadurch gekennzeichnet, dass** das sekundäre Oxidationsmittel aus einer Mischung von Luft, insbesondere vorgeheizter Luft, und Sauerstoff besteht.

**27.** Verfahren nach Anspruch 26, **dadurch gekennzeichnet, dass** die Luft 5 Vol.% bis 80 Vol.% des gesamten Sauerstoffs des sekundären Oxidationsmittels beiträgt, wobei der Zusatz durch Sauerstoff-angereicherte Luft oder im Wesentlichen reinem Sauerstoff beigetragen wird.

**28.** Verfahren nach Anspruch 27, **dadurch gekennzeichnet, dass** die Luft von 15 bis 40 Vol.% des gesamten Sauerstoffs darstellt.

**29.** Verfahren nach einem der vorhergehenden Ansprüche, **dadurch gekennzeichnet, dass** ein einziger Kraftstoff oder mehrere verschiedene Kraftstoffe eingespritzt werden.

**30.** Brennereinheit zum getrennten Einspritzen, bestehend aus einem Block, der mindestens eine Öffnung zur Einspritzung von Kraftstoff und mindestens eine Öffnung zur Einspritzung von Oxidationsmittel umfasst, Brennereinheit, bei der die Öffnung zur Einspritzung von Kraftstoff mindestens eines längs gerichtete Symmetrieachse in der Strömungsrichtung des Kraftstoffs umfasst, wobei eine erste Vorrichtung zur Einspritzung von Oxidationsmittel die auch eine längs gerichtete Symmetrieachse umfasst, in der Öffnung zur Einspritzung von Kraftstoff angeordnet ist, wobei die zwei längs gerichteten Symmetrieachsen im Wesentlichen parallel sind, wobei eine zweite Öffnung zur Einspritzung von Oxidationsmittel in einem Abstand d1 von der Symmetrieachse der ersten Vorrichtung zur Einspritzung von Oxidationsmittel angeordnet ist, **dadurch gekennzeichnet, dass** es mindestens einen zweiten Block umfasst, in dem eine dritte Öffnung zur Einspritzung von Oxidationsmittel mit einem Durchmeser D vorgesehen ist, und die in einem Abstand $d_2$ von der Symmetrieachse der ersten Vorrichtung zur Einspritzung von Oxidationsmittel angeordnet ist, wobei $d_1 \leq 30$ cm, $d_2 \geq 5D$ und $d2 \geq d1$.

**31.** Einheit nach Anspruch 30, wobei $10 \times D \leq d_2 \leq 50 \times D$.

**32.** Einheit nach einem der Ansprüche 30 oder 31, **dadurch gekennzeichnet, dass** $d1 \leq 10$ d3.

**33.** Einheit nach Anspruch 31 oder 32, **dadurch gekennzeichnet, dass** $D \geq 0{,}5$ cm.

**34.** Einheit nach einem der Ansprüche 30 bis 33, **dadurch gekennzeichnet, dass** der Block eine Vielzahl von Öffnungen zur Einspritzung von Kraftstoff umfasst.

**35.** Einheit nach einem der Ansprüche 30 bis 34, **dadurch gekennzeichnet, dass** der Block eine Vielzahl von ersten Vorrichtungen zur Einspritzung von Oxidationsmittel umfasst.

**36.** Einheit nach einem der Ansprüche 30 bis 35, **dadurch gekennzeichnet, dass** der Block eine Vielzahl von zweiten Öffnungen zur Einspritzung von Oxidationsmittel umfasst.

**37.** Einheit nach einem der Ansprüche 30 bis 36, **dadurch gekennzeichnet, dass** die Öffnung zur Einspritzung von Kraftstoff eine Vorrichtung zur Einspritzung von Schweröl umfasst.

**38.** Einheit nach einem der Ansprüche 30 bis 37, **dadurch gekennzeichnet, dass** sie mehrere verschiedene Öffnungen zur Einspritzung von Kraftstoff zur Einspritzung von einem oder von mehreren Kraftstoffen umfasst.

**39.** Einheit nach einem der Ansprüche 30 bis 38, **dadurch gekennzeichnet, dass** sie ein erstes Ventil zur Verteilung des gesamten Oxidationsmittels umfasst, das einerseits auf einem Kanal von primärem Oxidationsmittel und andererseits auf einem Kanal von sekundärem Oxidationsmittel mündet, der mit der dritten Öffnung zur Einspritzung von Oxidationsmittel verbunden ist, wobei der Kanal von primärem Oxidationsmittel mit einem zweiten Ventil zur Verteilung verbunden ist, das einerseits mit der ersten Vorrichtung zur Einspritzung von Oxidationsmittel und andererseits mit der zweiten Öffnung zur Einspritzung von Oxidationsmittel verbunden ist.

**40.** Einheit nach einem der Ansprüche 30 bis 39, **dadurch gekennzeichnet, dass** die dritte Öffnung zur Einspritzung von sekundärem Oxidationsmittel eine Einspritzvorrichtung mit doppeltem Abschnitt ist, um die Geschwindigkeit und den Umfang der Bewegung des Oxidationsmittels variieren lassen zu können, ohne den Druck des Oxidationsmittels vorgelagert von dieser Einspritzvorrichtung zu modifizieren.

**Claims**

1. Method of combustion in a furnace into which at least one fuel and at least one oxidiser are injected separately, the stream of oxidiser comprising a stream of primary oxidiser and a stream of secondary oxidiser, the stream of primary oxidiser being injected close to the fuel so as to generate first incomplete combustion, the gases emanating from this first combustion also including at least part of the fuel, whereas the stream of secondary oxidiser is injected at a certain distance from the stream of fuel that is greater than the distance between the stream of fuel and the stream of primary oxidiser closest to the stream of fuel, so as to enter into combustion with the portion of fuel that is diluted in particular by the gases from the first combustion and has not yet reacted with the oxidiser, **characterised in that** the stream of primary oxidiser is itself divided into at least two primary streams, namely at least one rapid-mixing first stream of primary oxidiser injected into the stream of fuel, so as to rapidly undergo a combustion reaction with the fuel that surrounds it, and at least one slow-mixing second stream of primary oxidiser injected at a distance d1 from the first stream of primary oxidiser, so as to mix less rapidly with the stream of fuel than at least one of the rapid-mixing streams of primary oxidiser.

2. Method according to claim 1, **characterised in that** the distance $d_1$ is less than or equal to 30 cm, preferably 25 cm.

3. Method according to claim 1, **characterised in that** the distance d1 is less than or equal to ten times the diameter d3 of the slow-mixing stream of primary oxidiser.

4. Method according to one of claims 1 to 3, **characterised in that** the sum of the streams of primary oxidiser and of secondary oxidiser is substantially stoichiometric with respect to the flow of fuel, preferably within a range of $\pm$ 15% with respect to the stoichiometric flow.

5. Method according to one of claims 1 to 4, **characterised in that** the stream of secondary oxidiser itself consists of a plurality of streams of secondary oxidiser.

6. Method according to one of claims 1 to 5, **characterised in that** the amount of secondary oxidiser is between 0% and 90%, preferably between 10% and 90%, of the total amount of oxidiser injected.

7. Method according to one of claims 1 to 6, **characterised in that** the total amount of secondary oxidiser is between 50% and 90% of the total amount of oxidiser injected, the primary oxidiser representing an amount between 10% and 50% of the total amount of oxidiser.

8. Method according to claim 7, **characterised in that** the total amount of secondary oxidiser is between 60% and 80% of the total amount of oxidiser injected, the amount of primary oxidiser being between 20% and 40% of this same total amount.

9. Method according to one of claims 1 to 8, **characterised in that** the sum of the areas of the cross sections of the secondary oxidiser injection ports is greater than or equal to 2.5 cm$^2$.

10. Method according to claim 9, **characterised in that** the distance between the rapid-mixing stream of oxidiser of the primary oxidiser and the stream of secondary oxidiser is equal to $d_2$, with
$d_2 \geq 5D$ and $d_2 \geq d1$ and preferably,
10 x D $\leq d_2 \leq$ 50D, D being the diameter of the circle with the same area as the area of the secondary injector through which the stream of secondary oxidiser is injected.

11. Method according to one of claims 1 to 10, **characterised in that** the rapid-mixing first stream(s) of primary oxidiser represents (represent) from 5 to 40 vol. % of the total amount of oxidiser, whereas the slow-mixing second stream(s) of primary oxidiser represents (represent) from 5 to 95 vol. % of the total amount of oxidiser, the possible balance of oxidiser being provided by the streams of secondary oxidiser.

12. Method according to one of the preceding claims, **characterised in that** the slow-mixing second stream of primary oxidiser itself consists of a plurality of streams.

13. Method according to claim 12, **characterised in that** the second stream of primary oxidiser consists of two substantially identical streams located approximately at the same distance $d_1$ from the rapid-mixing first stream of primary oxidiser, the three streams of oxidiser lying approximately in the same plane.

**14.** Method according to one of claims 1 to 13, **characterised in that** at least one slow-mixing second stream of primary oxidiser does not lie in the plane formed by the first stream of primary oxidiser and the stream of secondary oxidiser.

**15.** Method according to one of claims 1 to 14, **characterised in that** the plurality of second streams of primary oxidiser are arranged uniformly around the first stream of primary oxidiser.

**16.** Method according to claim 15, **characterised in that** the plurality of second streams of primary oxidiser are arranged symmetrically with respect to a plane containing the first stream of primary oxidiser.

**17.** Method according to one of claims 1 to 16, **characterised in that** the fuel injection velocity is greater than 20 m/s and preferably less than or equal to Mach 2.

**18.** Method according to claim 17, **characterised in that** the fuel injection velocity is between 20 m/s and 300 m/s.

**19.** Method according to either of claims 17 or 18, **characterised in that** the fuel may be preheated before being injected.

**20.** Method according to one of claims 17 to 19, **characterised in that** the fuel is pulsed during its injection, the frequency of these pulses being preferably between 0.1 and 3 Hz and more preferably between 0.1 and 1 Hz.

**21.** Method according to one of claims 1 to 20, **characterised in that** the rapid-mixing primary oxidiser injection velocity is between 20 m/s and Mach 2.

**22.** Method according to one of claims 1 to 21, **characterised in that** the slow-mixing primary oxidiser injection velocity is between 10 m/s and Mach 1.

**23.** Method according to one of claims 1 to 22, **characterised in that** the secondary oxidiser injection velocity is between 20 m/s and Mach 2.

**24.** Method according to one of claims 1 to 20, **characterised in that** at least one of the streams of oxidiser is preheated before it is injected, it being possible for its injection velocity to reach at most a velocity of Mach 2.

**25.** Method according to one of the preceding claims, **characterised in that** at least one of the streams of oxidiser is injected in pulses, the frequency of these pulses being between 0.1 and 3 Hz and preferably between 0.1 and 1 Hz.

**26.** Method according to one of the preceding claims, **characterised in that** the secondary oxidiser consists of a mixture of air, preferably preheated air, and oxygen.

**27.** Method according to claim 26, **characterised in that** the air provides from 5% to 80% by volume of the total oxygen of the secondary oxidiser, the balance being provided by oxygen-enriched air or substantially pure oxygen.

**28.** Method according to claim 27, **characterised in that** the air constitutes from 15 to 40 vol. % of the total oxygen.

**29.** Method according to one of the preceding claims, **characterised in that** a single fuel is injected or several different fuels are injected.

**30.** Separate injection burner assembly formed by a block comprising at least one fuel injection port and at least one oxidiser injection port, burner assembly in which the fuel injection port has at least one longitudinal axis of symmetry in the direction of flow of the fuel, a first oxidiser injector, that also has a longitudinal axis of symmetry, being placed in the fuel injection port, the two longitudinal axes of symmetry being approximately parallel, a second oxidiser injection port being placed at a distance $d_1$ from the axis of symmetry of the first oxidiser injector, **characterised in that** it comprises at least one second block in which a third oxidiser injection port of diameter D is provided, which port is placed at a distance $d_2$ from the axis of symmetry of the first oxidiser injector, with $d_1 \leq 30$ cm, $d2 \geq 5D$ and $d2 \geq d1$.

**31.** Assembly according to claim 30, in which $10 \times D \leq d_2 \leq 50 \times D$.

**32.** Assembly according to one of claims 30 or claim 31, **characterised in that** $d1 \leq 10\, d3$.

**33.** Method according to claim 31 or 32, **characterised in that** $D \geq 0.5$ cm.

**34.** Assembly according to one of claims 30 to 33, **characterised in that** the block comprises a plurality of fuel injection ports.

**35.** Assembly according to one of claims 30 to 34, **characterised in that** the block comprises a plurality of first oxidiser injectors.

**36.** Assembly according to one of claims 30 to 35, **characterised in that** the block comprises a plurality of second oxidiser injection ports.

**37.** Assembly according to one of claims 30 to 36, **characterised in that** the fuel injection port comprises a heavy fuel oil injector.

**38.** Assembly according to one of claims 30 to 37, **characterised in that** it comprises a plurality of separate fuel injection ports for injecting one or more fuels.

**39.** Assembly according to one of claims 30 to 38, **characterised in that** it comprises a first flow-dividing valve for dividing the total flow of oxidiser, which runs on the one hand into a primary oxidiser line and on the other hand into a secondary oxidiser line connected to the third oxidiser injection port, the primary oxidiser line being connected to a second flow-dividing valve that is connected on the one hand to the first oxidiser injector and on the other hand to the second oxidiser injection port.

**40.** Assembly according to one of claims 30 to 39, **characterised in that** the third secondary oxidiser injection port is an injector having two cross sections, so as to be able to vary the velocity and the momentum of the oxidiser without modifying the pressure of the oxidiser upstream of said injector.

Flux kw/m²

EP 1 379 810 B1

FIG.1

FIG.2

FIG.3a

d2

d1

OXYDANT
PRIMAIRE
MELANGE
RAPIDE

25
COMBUSTIBLE

23

24
OXYDANT PRIMAIRE
MELANGE LENT

43

OXYDANT
PRIMAIRE

21

20

42

OXYDANT
TOTAL

OXYDANT
SECONDAIRE

22

FIG.3b

FIG.4

FIG.5

FIOUL
101
100

OXYGENE
PRIMAIRE A
MELANGE LENT

102    103    104    105

GAZ NATUREL    111    120    130

107    106

284 mm    284 mm
à 500 mm    à 500 mm

110    121 131

OXYGENE
PRIMAIRE A
MELANGE RAPIDE

OXYGENE
SECONDAIRE

EP 1 379 810 B1

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4531960 A
- US 4604123 A
- US 4622007 A
- US 4642047 A
- US 4797087 A
- US 4718643 A
- US RE33464 A
- US 5772427 A

- US 5934893 A
- US 5984667 A
- US 6068468 A
- US 5954855 A
- US 5302112 A
- US 5346524 A
- US 5601425 A